# EUROPÄISCHE PATENTSCHRIFT

(11) **EP 1 854 583 B1**
(45) Veröffentlichungstag und Bekanntmachung des Hinweises auf die Patenterteilung: **26.11.2008**
(21) Anmeldenummer: 07106843.1
(22) Anmeldetag: 24.04.2007
(51) Int. Cl.: B23Q 11/00

(54) **Absaugvorrichtung für ein Abbauwerkzeuggerät**
Suction device for a dismounting tool
Dispositif d'aspiration pour un appareil d'abrasion

(30) Priorität: 08.05.2006 DE 102006000214
(43) Veröffentlichungstag der Anmeldung: 14.11.2007
(73) Patentinhaber: HILTI Aktiengesellschaft, 9494 Schaan (LI)
(72) Erfinder: Bleicher, Jochen, 86929 Penzing (DE); Ohlendorf, Oliver, 86899 Landsberg (DE); Holzmeier, Georg, 86836 Untermeitingen (DE)
(74) Vertreter: Wildi, Roland

(56) Entgegenhaltungen:
- EP-A- 1 279 464
- EP-A- 1 486 288
- WO-A-95/20440
- FR-A1- 2 763 528
- GB-A- 1 334 366
- GB-A- 2 262 159
- US-A- 3 638 737
- US-A- 5 474 116

## Beschreibung

Die Erfindung betrifft eine Absaugvorrichtung für ein Abbauwerkzeuggerät, der im Oberbegriff des Patentanspruchs 1 genannten Art.

Bei der Bearbeitung eines mineralischen Untergrundes, wie beispielsweise einer Betonwand oder Betondecke, mit einem Werkzeug eines Abbauwerkzeuggerätes, wie ein Bohr-, Kombi- oder Meisselhammer, fallen Stücke von abgebauten Material sowie Staub an. Insbesondere die anfallenden Staubpartikel führen zu einer Verschmutzung der Umgebung, z. B. in Innenräumen eines Gebäudes, und behindern den Anwender bei seiner Arbeit.

In der WO 95/20440 A1 wird eine Absaugvorrichtung für eine elektrische Handbohrmaschine vorgeschlagen, die ein erstes Ende und ein dem ersten Ende gegenüberliegend angeordnetes zweites Ende aufweist, wobei die Absaugvorrichtung sich entlang einer Längsachse erstreckt und einen Aufnahmeraum zum bereichsweisen Umhüllen eines Werkzeuges der Bohrmaschine aufweist. An dem ersten Ende der Absaugvorrichtung ist eine Festlegeeinrichtung zur Festlegung der Absaugvorrichtung an dem Abbauwerkzeuggerät vorgesehen. Weiter weist die Absaugvorrichtung einen elastischen Abschnitt auf, der parallel zur Längsachse der Absaugvorrichtung in seiner Längserstreckung reduzierbar ist und mit seinem freien Ende das zweite Ende der Absaugvorrichtung ausbildet. Zudem ist diese Absaugvorrichtung mit einem Anschlussstutzen als Anschlusseinrichtung für eine Saugleitung einer Vakuumquelle versehen, wobei der Anschlussstutzen in einem Winkel schräg zur Längsachse der Absaugvorrichtung angeordnet ist.

Zur Bearbeitung des Untergrundes wird das zweite Ende der Absaugvorrichtung mit dem Untergrund in Anlage gebracht und der beim Bohren anfallende Staub sowie anfallende Stücke des abgebauten Materials mittels der Vakuumquelle, z. B. in Form eines Industriestaubsaugers, abgesaugt. Der elastische Abschnitt gewährleistet die Anlage der Absaugvorrichtung am Untergrund auch bei einem fortgeschrittenen Abbauvorgang, wenn das Werkzeug in den Untergrund eingedrungen ist, und auch bei einer zu der zum Untergrund ausgerichteten Senkrechten geneigten Ausrichtung des Abbauwerkzeuggerätes. Durch die in einem Winkel schräg zur Längsachse der Absaugvorrichtung angeordnete Anschlusseinrichtung wird in der Absaugvorrichtung eine Saugströmung für ein vorteilhaftes Absaugen der anfallenden Staubpartikel geschaffen.

Nachteilig an der bekannten Lösung ist, dass trotzdem viele Staubpartikel in unterschiedlichen Grössenordnungen bis zur Werkzeugaufnahme des Abbauwerkzeuggerätes gelangen können und dort zu einem erhöhten Verschleiss der Werkzeugaufnahme führen. Infolge der auftretenden Staubverschleppung im Bereich der Werkzeugaufnahme kann zudem auch ein erhöhter Verschleiss an dem Einsteckende des Werkzeugs und sogar in einem Schlagwerk des Abbauwerkzeuggerätes auftreten.

Aus der GB 1 334 366 ist eine Absaugvorrichtung für eine elektrische Handbohrmaschine bekannt, die eine Zwischenwand mit einem Aufnahmeraum für eine Werkzeugaufnahme der Handbohrmaschine sowie eine Durchführöffnung für ein in der Werkzeugaufnahme angeordnetes Werkzeug aufweist.

Nachteilig an der bekannten Lösung ist, dass in der Absaugvorrichtung unerwünschte Turbulenzen auftreten können und daher Staubpartikel bis zur Werkzeugaufnahme vordringen können. Diese kommen beispielsweise in den Spalt zwischen der Zwischenwand und der Werkzeugaufnahme zu liegen und führen dort, insbesondere bei einer rotierenden Werkzeugaufnahme zu einem erhöhten Verschleiss derselben.

Aufgabe der Erfindung ist es, eine Absaugvorrichtung für ein Abbauwerkzeuggerätes zur Verminderung der Staubbelastung zu schaffen, wobei der Verschleiss der Abbauwerkzeuggeräte mit angeordneter Absaugvorrichtung reduziert ist.

Die Aufgabe ist durch die Merkmale des unabhängigen Anspruchs gelöst. Vorteilhafte Weiterbildungen sind in den Unteransprüchen dargelegt.

Gemäss der Erfindung sind eine erste Prallwand und zumindest eine weitere Prallwand beabstandet zueinander in der Absaugvorrichtung vorgesehen. Die erste Prallwand ist zwischen der Anschlusseinrichtung und dem ersten Ende der Absaugvorrichtung und die zumindest eine weitere Prallwand ist zwischen der ersten Prallwand und dem ersten Ende der Absaugvorrichtung angeordnet. Die erste Prallwand und die zumindest eine weitere Prallwand weisen jeweils eine Durchführöffnung für das Werkzeug des Abbauwerkzeuggerätes auf.

Durch die Anordnung von zumindest zwei zueinander beabstandeten Prallwänden oberhalb des von der Vakuumquelle erzeugten Luftstroms ist eine ausreichende Absaugung der anfallenden Staubpartikel gewährleistet und der Zutritt von Staubpartikeln bis zum Abbauwerkzeuggerät behindert. Die zweite Prallwand ist beispielsweise als Einsatzteil ausgebildet, welches in dem Aufnahmeraum der Absaugvorrichtung z. B. über eine Halteeinrichtung oder mittels eines Klebemittels festgelegt wird. Die Durchführöffnungen in den Prallwänden sind vorteilhaft auf die üblicherweise mit dem Abbauwerkzeuggerät zur Anwendung kommenden Werkzeugen abgestimmt, um den Ringspalt zwischen den Durchführöffnungen und dem Werkzeug zu begrenzen. Allfällige durch den Ringspalt in der ersten Prallwand dringende Staubpartikel werden zu einem wesentlichen Teil in dem Zwischenraum zwischen der ersten Prallwand und der zumindest einen weiteren Prallwand gefangen. Sind noch weitere Prallwände in der Absaugvorrichtung vorgesehen, so werden die Staubpartikel, die durch den Ringspalt der zumindest einen weiteren Prallwand gelangen, in den weiteren Zwischenräumen gefangen. Sollten einzelne wenige Staubpartikel trotz der Ausbildung der erfindungsgemässen Absaugvorrichtung bis zur Werkzeugaufnahme des Abbauwerkzeuggerätes gelangen, so sind deren Anzahl und deren Grösse derart klein, dass der Verschleiss des Abbauwerkzeuggerätes und insbesondere der Werkzeugaufnahme nur unwesentlich durch diese erhöht wird.

Die Anzahl der Prallwände beträgt zumindest zwei und kann beliebig entsprechend der endgültigen Ausgestaltung der Absaugvorrichtung erhöht werden. Vorteilhaft werden zwei bis zehn Prallwände und besonders vorteilhaft zwei bis vier Prallwände in einer Absaugvorrichtung vorgesehen.

Vorteilhaft weist die Absaugvorrichtung einen elastischen Abschnitt auf, der die Anlage der Absaugvorrichtung am Untergrund auch bei einem fortgeschrittenen Abbauvorgang und einem schräg gestellten Abbauwerkzeuggerät gewährleistet.

Die Festlegeeinrichtung ist vorteilhaft für eine lösbare Festlegung der Absaugvorrichtung an dem Abbauwerkzeuggerät ausgebildet und weist dazu beispielsweise ein Klemmelement auf, das eine Festlegung der Absaugvorrichtung an einem Gehäuseabschnitt oder an der Werkzeugaufnahme des Abbauwerkzeuggerätes ermöglicht. Bei einer rotierenden Werkzeugaufnahme kann die Absaugvorrichtung beispielsweise über ein Gleit- oder Wälzlager an der Werkzeugaufnahme festgelegt sein.

Vorzugsweise ist zumindest die erste Prallwand schräg zur Längsachse der Absaugvorrichtung angeordnet, wodurch der von der Vakuumquelle erzeugte Saugstrom vorteilhaft umgeleitet und somit die von diesem mitgeführten Staubpartikel vorteilhafterweise abgeführt werden. Zumindest die erste Prallwand ist vorteilhaft in einem Winkel von 20° bis 70° zur Längsachse der Absaugvorrichtung angeordnet. Auch die zumindest eine weitere Prallwand kann schräg zur Längsachse der Absaugvorrichtung ausgerichtet sein, wobei diese beispielsweise in gleicher Neigungsrichtung wie die erste Prallwand, parallel oder entgegengesetzt ausgerichtet zu dieser angeordnet sein kann.

Bevorzugt ist zumindest die erste Prallwand parallel zur Ausrichtung der Anschlusseinrichtung angeordnet, wodurch der von der Vakuumquelle erzeugte Saugstrom besonders vorteilhaft umgeleitet wird.

Vorzugsweise ist zumindest die erste Prallwand gewölbt, wobei ein von der Prallwand gebildeter konkaver Raum dem zweiten Ende der Absaugvorrichtung zugewandt ist. Mit einer gewölbten Prallwand weist die Absaugvorrichtung im Inneren eine geringere Anzahl von Kanten auf, wodurch die Anzahl unerwünschter Turbulenzen innerhalb der Absaugvorrichtung reduziert wird und somit die Effektivität des von der Vakuumquelle erzeugten Saugstroms gesteigert wird.

Bevorzugt ist die Krümmung genau einer der beiden Hauptkrümmungsachsen der gewölbten Prallwand gleich oder mathematisch ausgedrückt identisch Null, so dass diese einer Geraden entspricht. Unter dem Begriff Hauptkrümmungsachsen werden die beiden zueinander senkrecht ausgerichteten Hauptkrümmungsachsen verstanden, welche die Wölbung der entsprechenden Prallwand definieren. Die gewölbte Prallwand weist im Wesentlichen eine hohlzylindrische Ausgestaltung auf, deren Aussenränder mit der Wandung der Absaugvorrichtung luftdicht verbunden sind.

Vorzugsweise verläuft die Hauptkrümmungsachse der gewölbten Prallwand, welche identisch Null ist, parallel zur Ausrichtung der Anschlusseinrichtung, wodurch die Anzahl unerwünschter Turbulenzen innerhalb der Absaugvorrichtung zusätzlich reduziert wird.

Bevorzugt ist zumindest eine Ansaugöffnung zwischen der ersten Prallwand und dem ersten Ende der Absaugvorrichtung vorgesehen, so dass durch diese Umgebungsluft zur Luftspülung der Bereiche zwischen der ersten Prallwand und dem ersten Ende der Absaugvorrichtung von der Vakuumquelle angesaugt wird. Es wird ein so genannter Luftvorhang geschaffen, der eine Staubverschleppung in Richtung des Abbauwerkzeuggerätes durch die Ringspalte zwischen den Prallwänden und dem Werkzeug des Abbauwerkzeuggerätes weitgehend verhindert. Vorteilhaft sind mehrere Ansaugöffnungen mit kleinen Querschnitten vorgesehen, so dass in der Umgebung vorhandene Verunreinigungen nur zu einem unwesentlichen Anteil in die Bereiche zwischen der ersten Prallwand und dem ersten Ende der Absaugvorrichtung angesaugt werden.

Vorzugsweise ist zumindest eine Ansaugöffnung zwischen der zumindest einen weiteren Prallwand und dem ersten Ende der Absaugvorrichtung vorgesehen, wodurch insbesondere der Bereich vor der Werkzeugaufnahme des Abbauwerkzeuggerätes beim Betrieb der Vakuumpumpe ausreichend luftgespült wird und ein Zutritt von Staubpartikeln bis zur Werkzeugaufnahme weitgehend verhindert ist.

Bevorzugt ist die zumindest eine Ansaugöffnung eine Bohrung in der Absaugvorrichtung, die vorteilhaft in der Wandung der Absaugvorrichtung vorgesehen ist. Besonders vorteilhaft sind mehrere Bohrungen auf einer quer zur Längsachse der Absaugvorrichtung verlaufenden Ebene und im Wesentlichen gleichmässig beabstandet zueinander vorgesehen. Um eine verbesserte Luftspülung der Bereiche zwischen der ersten Prallwand und dem ersten Ende der Absaugvorrichtung zu gewährleisten, ist die Absaugvorrichtung vorteilhaft abgedichtet an dem Abbauwerkzeuggerät festgelegt, wodurch der Ansaugeffekt durch die zumindest eine Ansaugöffnung verbessert wird.

Vorzugsweise ist die zumindest eine Ansaugöffnung ein parallel zur Längsachse der Absaugvorrichtung verlaufender Kanal, der im Bereich des ersten Endes der Absaugvorrichtung angeordnet ist. Beispielsweise ist die Absaugvorrichtung im Bereich des ersten Endes zur Schaffung von zumindest einem Kanal zumindest bereichsweise beabstandet zu einem Gehäuseabschnitt des Abbauwerkzeuggerätes angeordnet.

Die Erfindung wird nachstehend anhand eines Ausführungsbeispieles näher erläutert. Es zeigen:

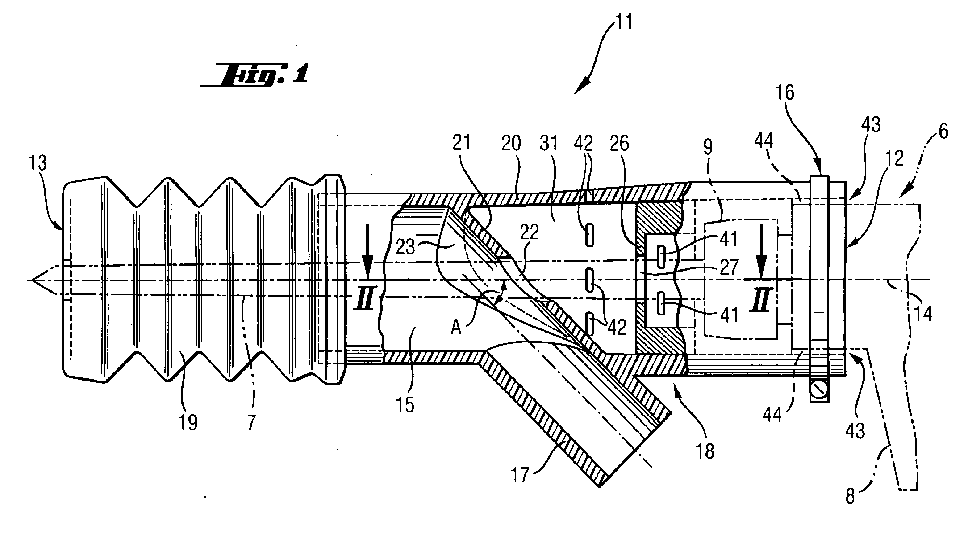

Fig. 1 Eine Teilschnittansicht einer erfindungsgemässen Absaugvorrichtung; und

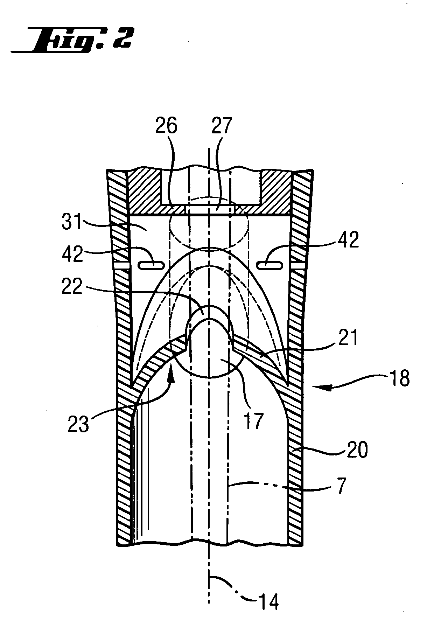

Fig. 2 einen Detailschnitt entlang der Längsachse gemäss II-II in der Fig. 1.

Grundsätzlich sind in den Figuren gleiche Teile mit den gleichen Bezugszeichen versehen.

Die in den Figuren dargestellte Absaugvorrichtung 11 für ein Abbauwerkzeuggerät 6, wie ein Bohrhammer, weist ein erstes Ende 12 und ein dem ersten Ende 12 gegenüberliegend angeordnetes zweites Ende 13 auf. Die Absaugvorrichtung 11 erstreckt sich entlang einer Längsachse 14 und weist einen Aufnahmeraum 15 zum bereichsweisen Umhüllen eines Werkzeuges 7 des Abbauwerkzeuggerätes 6 auf. Der Aufnahmeraum 15 wird durch einen starren, rohrförmigen Abschnitt 18 und einen elastischen Abschnitt 19 gebildet, wobei sich der starre Abschnitt 18 von dem ersten Ende 12 der Absaugvorrichtung 11 in Richtung des zweiten Endes 13 der Absaugvorrichtung 11 erstreckt. Der elastische Abschnitt 19 erstreckt sich anschliessend an den starren Abschnitt 18, wobei dessen freies Ende das zweite Ende 13 der Absaugvorrichtung 11 bildet.

Am ersten Ende 12 der Absaugvorrichtung 11 zur Festlegung der Absaugvorrichtung 11 an dem Abbauwerkzeuggerät 6 eine Festlegeeinrichtung 16 vorgesehen, die in diesem Ausführungsbeispiel als Klemmschelle ausgebildet ist. Weiter weist die Absaugvorrichtung 11 eine Anschlusseinrichtung 17 in Form eines Anschlussstutzens für eine Vakuumquelle auf, die in einem Winkel A von 45° schräg zur Längsachse 14 der Absaugvorrichtung 11 angeordnet ist.

Beabstandet zueinander sind eine erste Prallwand 21 und eine zweite Prallwand 26 in der Absaugvorrichtung 11 vorgesehen, wobei die erste Prallwand 21 zwischen der Anschlusseinrichtung 17 und dem ersten Ende 12 der Absaugvorrichtung 11 und die zweite Prallwand 26 zwischen der ersten Prallwand 21 und dem ersten Ende 12 der Absaugvorrichtung 11 angeordnet ist. Die erste Prallwand 21 und die zweite Prallwand 26 weisen jeweils eine Durchführöffnung 22 bzw. 27 für das Werkzeug 7 des Abbauwerkzeuggerätes 6 auf. Zwischen der zweiten Prallwand 26 und dem ersten Ende 12 der Absaugvorrichtung 11 wird die Werkzeugaufnahme 9 des Abbauwerkzeuggerätes 6 von der Absaugvorrichtung 11 umhüllt.

Die erste Prallwand 26 ist schräg zur Längsachse 14 der Absaugvorrichtung 11 und parallel zur Ausrichtung der Anschlusseinrichtung 17 angeordnet. Zudem ist die erste Prallwand 21 gewölbt, wobei ein von der ersten Prallwand 21 gebildeter konkaver Raum 23 dem zweiten Ende 13 der Absaugvorrichtung 11 zugewandt ist. Genau eine der beiden Hauptkrümmungsachsen der gewölbten ersten Prallwand 21 ist gleich beziehungsweise identisch Null und verläuft parallel zur Ausrichtung der Anschlusseinrichtung 17. Die erste Prallwand 21 ist in diesem Ausführungsbeispiel ein Wandabschnitt eines Hohlzylinders, der mit der Wandung 20 der Absaugvorrichtung 11 verbunden ist.

Zwischen der zweiten Prallwand 26 und dem ersten Ende 12 der Absaugvorrichtung 11 sind mehrere Ansaugöffnungen 41 vorgesehen, die als radial verlaufende Bohrungen in der Wandung 20 des starren Abschnitts 18 der Absaugvorrichtung 11 ausgebildet sind.

Zusätzlich oder alternativ sind auch in dem Zwischenraum 31 zwischen der ersten Prallwand 21 und der zweiten Prallwand 26 Ansaugöffnungen 42 in der Wandung 20 der Absaugvorrichtung 11 vorgesehen, welche vorteilhaft ebenfalls als radial verlaufende Bohrungen ausgebildet sind.

Die Absaugvorrichtung 11 ist im Bereich des ersten Endes 12 der Absaugvorrichtung 11 zur Ausbildung von parallel zur Längsachse 14 der Absaugvorrichtung 11 verlaufenden Kanälen 44 bereichsweise beabstandet zum Gehäuse 8 des Abbauwerkzeuggerätes 6 angeordnet, wodurch weitere Ansaugöffnungen 43 ausgebildet werden.

## Patentansprüche

1. Absaugvorrichtung für ein Abbauwerkzeuggerät (6) mit einem ersten Ende (12) und einem dem ersten Ende (12) gegenüberliegend angeordneten zweiten Ende (13), wobei die Absaugvorrichtung (11) sich entlang einer Längsachse (14) erstreckt und einen Aufnahmeraum (15) zum zumindest bereichsweisen Umhüllen eines Werkzeuges (7) des Abbauwerkzeuggerätes (6) aufweist,
mit einer Festlegeeinrichtung (16) am ersten Ende (12) der Absaugvorrichtung (11) zur Festlegung der Absaugvorrichtung (11) an dem Abbauwerkzeuggerät (6),
mit einer Anschlusseinrichtung (17) für eine Vakuumquelle, die in einem Winkel (A) zur Längsachse (14) der Absaugvorrichtung (11) angeordnet ist, **dadurch gekennzeichnet, dass**
eine erste Prallwand (21) und zumindest eine weitere Prallwand (26) beabstandet zueinander in der Absaugvorrichtung (11) vorgesehen sind, wobei die erste Prallwand (21) zwischen der Anschlusseinrichtung (17) und dem ersten Ende (12) der Absaugvorrichtung (11) und die zumindest eine weitere Prallwand (26) zwischen der ersten Prallwand (21) und dem ersten Ende (12) der Absaugvorrichtung (11) angeordnet ist, wobei die erste Prallwand (21) und die zumindest eine weitere Prallwand (26) jeweils eine Durchführöffnung (22, 27) für das Werkzeug (7) des Abbauwerkzeuggerätes (6) aufweisen.

2. Absaugvorrichtung nach Anspruch 1, **dadurch gekennzeichnet, dass** zumindest die erste Prallwand (21) schräg zur Längsachse (14) der Absaugvorrichtung (11) angeordnet ist.

3. Absaugvorrichtung nach Anspruch 2, **dadurch gekennzeichnet, dass** zumindest die erste Prallwand (21) parallel zur Ausrichtung der Anschlusseinrichtung (17) angeordnet ist.

4. Absaugvorrichtung nach einem der Ansprüche 1 bis 3, **dadurch gekennzeichnet, dass** zumindest die erste Prallwand (21) gewölbt ist, wobei ein von der ersten Prallwand (21) gebildeter konkaver Raum (23) dem zweiten Ende (13) der Absaugvorrichtung (11) zugewandt ist.

5. Absaugvorrichtung nach Anspruch 4, **dadurch gekennzeichnet, dass** die Krümmung genau einer der beiden Hauptkrümmungsachsen der gewölbten Prallwand (21) gleich Null ist.

6. Absaugvorrichtung nach Anspruch 5, **dadurch gekennzeichnet, dass** die Hauptkrümmungsachse der gewölbten Prallwand (21), welche gleich Null ist, parallel zur Ausrichtung der Anschlusseinrichtung (17) verläuft.

7. Absaugvorrichtung nach einem der Ansprüche 1 bis 6, **dadurch gekennzeichnet, dass** zumindest eine Ansaugöffnung (41, 42, 43) zwischen der ersten Prallwand (21) und dem ersten Ende (12) der Absaugvorrichtung (11) vorgesehen ist.

8. Absaugvorrichtung nach einem der Ansprüche 1 bis 7, **dadurch gekennzeichnet, dass** zumindest eine Ansaugöffnung (41, 43) zwischen der zumindest einen weiteren Prallwand (26) und dem ersten Ende (12) der Absaugvorrichtung (11) vorgesehen ist.

9. Absaugvorrichtung nach Anspruch 7 oder 8, **dadurch gekennzeichnet, dass** die zumindest eine Ansaugöffnung (41, 42) eine Bohrung in der Absaugvorrichtung (11) ist.

10. Absaugvorrichtung nach einem der Ansprüche 7 bis 9, **dadurch gekennzeichnet, dass** die zumindest eine Ansaugöffnung (43) ein parallel zur Längsachse (14) der Absaugvorrichtung (11) verlaufender Kanal (44) ist, der im Bereich des ersten Endes (12) der Absaugvorrichtung (11) angeordnet ist.

## Claims

1. Suction device for a demolition apparatus (6) comprising a first end (12) and a second end (13) arranged opposing the first end (12), wherein the suction device (11) extends along a longitudinal axis (14) and has a receptacle chamber (15) for at least partially surrounding a tool (7) of the demolition apparatus (6), having a fixing device (16) at the first end (12) of the suction device (11) for fixing the suction device (11) to the demolition apparatus (6), and having a connection device (17) for vacuum source, said connection device being arranged at an angle (A) to the longitudinal axis (14) of the section device (11), **characterised in that** a first deflection wall (21) and a further deflection wall (26) are provided, in the suction device (11) spaced apart from one another,
wherein the first deflection wall (21) is arranged between the connection device (17) and the first end (12) of the suction device (11) and the at least one further deflection wall (26) is arranged between the first deflection wall (21) and the first end (12) of the suction device (11), wherein the first deflection wall (21) and the at least one further deflection wall (26) each have a passage opening (22, 27) for the tool (7) of the demolition apparatus (6).

2. Suction device according to claim 1, **characterised in that** at least the first deflection wall (21) is arranged inclined to the longitudinal axis (14) of the suction device (11).

3. Suction device according to claim 2, **characterised in that** at least the first deflection wall (21) is arranged parallel to the orientation of the connection device (17).

4. Suction device according to one of the claims 1 to 3, **characterised in that** the first deflection wall (21) is arched, wherein a concave chamber (23) formed by the first deflection wall (21) faces towards the second end (13) of the suction device (11).

5. Suction device according to claim 4, **characterised in that** the curvature of exactly one of the two main axes of curvature of the arched deflection wall (21) is equal to zero.

6. Suction device according to claim 5, **characterised in that** the main axis of curvature of the arched deflection wall (21) which is equal to zero runs parallel to the orientation of the connection device (17).

7. Suction device according to one of the claims 1 to 6, **characterised in that** at least one suction opening (41, 42, 43) is provided between the first deflection wall (21) and the first end (12) of the suction device (11).

8. Suction device according to one of the claims 1 to 7, **characterised in that** at least one suction opening (41, 43) is provided between the at least one further deflection wall (26) and the first end (12) of the suction device (11).

9. Suction device according to claim 7 or 8, **characterised in that** the at least one suction opening (41, 42) is a bore in the suction device (11).

10. Suction device according to one of the claims to 9, **characterised in that** the at least one suction opening (43) is a channel (44) running parallel to the longitudinal axis (14) of the suction device (11), said channel being arranged in the region of the first end (12) of the suction device (11).

## Revendications

1. Dispositif d'aspiration pour un appareil d'enlèvement (6), comprenant une première extrémité (12) et une seconde extrémité (13) disposée à l'opposé de la première extrémité (12), le dispositif d'aspiration (11) s'étendant suivant un axe longitudinal (14) et comprenant un espace de réception (15) pour entourer au moins par endroits un outil (7) de l'appareil d'enlèvement (6), comprenant un dispositif de blocage (16) à la première extrémité (12) du dispositif de liaison (11) pour bloquer le dispositif d'aspiration (11) sur l'appareil d'enlèvement (6), comprenant un dispositif de raccordement (17) pour une source de vide, lequel est disposé selon un angle (A) par rapport à l'axe longitudinal (14) du dispositif d'aspiration (11), **caractérisé en ce qu'**une première paroi déflectrice (21) et au moins une paroi déflectrice supplémentaire (26) sont prévues à distance l'une de l'autre dans le dispositif d'aspiration (11), la première paroi déflectrice (21) étant disposée entre le dispositif de raccordement (17) et la première extrémité (12) du dispositif d'aspiration (11), et la paroi déflectrice supplémentaire au nombre d'au moins une (26) étant disposée entre la première paroi déflectrice (21) et la première extrémité (12) du dispositif d'aspiration (11), la première paroi déflectrice (21) et la paroi déflectrice supplémentaire au nombre d'au moins une (26) étant chacune pourvues d'une ouverture traversante (22, 27) pour l'outil (7) de l'appareil d'enlèvement (6).

2. Dispositif d'aspiration selon la revendication 1, **caractérisé en ce qu'**au moins la première paroi déflectrice (21) est disposée de manière inclinée par rapport à l'axe longitudinal (14) du dispositif d'aspiration (11).

3. Dispositif d'aspiration selon la revendication 2, **caractérisé en ce qu'**au moins la première paroi déflectrice (21) est disposée parallèlement à l'orientation du dispositif de raccordement (17).

4. Dispositif d'aspiration selon une des revendications 1 à 3, **caractérisé en ce qu'**au moins la première paroi déflectrice (21) est bombée, un espace concave (23) formé par la première paroi déflectrice (31) étant tourné vers la seconde extrémité (13) du dispositif d'aspiration (11).

5. Dispositif d'aspiration selon la revendication 4, **caractérisé en ce que** la courbure d'exactement un des deux axes de courbure principaux de la paroi déflectrice bombée (21) est égale à zéro.

6. Dispositif d'aspiration selon la revendication 5, **caractérisé en ce que** l'axe de courbure principal de la paroi déflectrice bombée (21), lequel est égal à zéro, s'étend parallèlement à l'orientation du dispositif de raccordement (17).

7. Dispositif d'aspiration selon une des revendications 1 à 6, **caractérisé en ce qu'**au moins une ouverture d'aspiration (41, 42, 43) est prévue entre la première paroi déflectrice (21) et la première extrémité (12) du dispositif d'aspiration (11).

8. Dispositif d'aspiration selon une des revendications 1 à 7, **caractérisé en ce qu'**au moins une ouverture d'aspiration (41, 43) est prévue entre la paroi déflectrice supplémentaire au nombre d'au moins une (26) et la première extrémité (12) du dispositif d'aspiration (11).

9. Dispositif d'aspiration selon la revendication 7 ou 8, **caractérisé en ce que** l'ouverture d'aspiration au nombre d'au moins une (41, 42) est on trou ménagé dans le dispositif d'aspiration (11).

10. Dispositif d'aspiration selon une des revendications 7 à 9, **caractérisé en ce que** l'ouverture d'aspiration au nombre d'au moins une (43) est un canal (44) qui s'étend parallèlement à l'axe longitudinal (11) du dispositif d'aspiration (11) et qui est disposé dans la zone de la première extrémité (12) du dispositif d'aspiration (11).
